# EUROPEAN PATENT APPLICATION

(11) **EP 4 621 323 A1**
(43) Date of publication of application: **24.09.2025**
(21) Application number: 23891492.3
(22) Date of filing: 10.11.2023
(51) Int. Cl.: F25B 49/02, F24F 11/38, G05B 23/02, F24F 140/10, F24F 140/20

(54) **FACILITY EQUIPMENT MANAGEMENT DEVICE AND ABNORMALITY DETECTION METHOD FOR FACILITY EQUIPMENT**

(30) Priority: 14.11.2022 JP 2022181947
(71) Applicant: Carrier Japan Corporation, Tokyo 141-0032 (JP)
(72) Inventor: KOMURE, Shinya, Fuji-shi, Shizuoka 416-8521 (JP)
(74) Representative: Gramm, Lins & Partner Patent- und Rechtsanwälte PartGmbB
(86) International application number: PCT/JP2023/040611
(87) International publication number: WO 2024/106344

(57) **Abstract**

A facility device management apparatus (20) and abnormality detection method for a facility device (10) includes an operation information acquisition unit (221), a determination value calculation unit (222), and an abnormality detection unit (223). The operation information acquisition unit (221) is configured to acquire operation status information related to a predetermined item for each predetermined time from each of three or more facility devices that are predetermined to be configured with the same specification and to have a similar operating environment. The determination value calculation unit (222) is configured to calculate a feature value of operation status information related to the predetermined item for each facility device included in the three or more facility devices, calculate a difference value between feature values of one of the three or more facility devices and each of the other of the three or more facility devices, and calculate a median value or an average value of calculated difference values as a determination value of relevant facility devices. The abnormality detection unit (223) is configured to detect the facility device that has a determination value exceeding a preset threshold as a facility device in which an abnormality has occurred with respect to the operation status information.

## Description

### FIELD

The present invention relates to a facility device management apparatus and an abnormality detection method for a facility device.

### BACKGROUND

A large number of facility devices are installed in a large building. There are two main approaches to detecting facility device abnormalities.

In the first approach, a facility device management apparatus that centrally manages the large number of facility devices learns operation data during normal operation for each facility device in order to construct a mathematical model, and to hold the mathematical model. Then, based on the mathematical model, the facility device management apparatus performs determination processing on the operation data of the facility devices to be monitored, thereby determining the presence or absence of abnormality in the facility devices to be monitored.

In the second approach, a facility device management apparatus learns operation data of a large number of facility devices during normal operation in order to construct a general mathematical model that is common to the large number of facility devices, and to hold the mathematical model. Then, based on the general mathematical model, the facility device management apparatus performs determination processing on the operation data of the facility devices to be monitored, thereby determining the presence or absence of abnormality in the operation data of the facility devices to be monitored.

### CITATION LIST

### PATENT LITERATURE

Patent Literature 1: JP 6969588 B2

### SUMMARY

### TECHNICAL PROBLEM

When using the first approach described above, there is an advantage that highly accurate abnormality determination processing including the operating environment of facility devices, such as an installation location, can be performed for the facility devices. However, when using the first approach, it is necessary to hold a large number of mathematical models in the facility device management apparatus according to the number of facility devices, and to perform determination processing using the corresponding mathematical models for the facility devices. Therefore, when using the first approach, there is a problem that management and determination processing of the mathematical models become complicated.

When using the second approach, there is an advantage that management and determination processing of the mathematical models can be performed in a simple manner. However, when using the second approach, it is not possible to take into account the operating environment of facility devices, such as an installation location and an influence of disturbance due to aging. Therefore, when using the second approach, there is a problem that highly accurate determination processing cannot be performed.

It is an object of the invention to provide a facility device management apparatus and an abnormality detection method for a facility device, which can detect abnormalities occurring in a plurality of facility devices by simple processing while considering the operating environment of the facility devices.

### SOLUTION TO PROBLEM

A facility device management apparatus according to an embodiment of the present invention includes an operation information acquisition unit, a determination value calculation unit, and an abnormality detection unit. The operation information acquisition unit is configured to acquire operation status information related to a predetermined item for each predetermined time from each of three or more facility devices that are predetermined to be configured with the same specification and to have a similar operating environment. Based on the information acquired by the operation information acquisition unit, the determination value calculation unit is configured to: calculate a feature value of the operation status information related to the predetermined item for each facility device included in the three or more facility devices; calculate a difference value between the feature values of any one of the three or more facility devices and each of the other of the three or more facility devices; and calculate a median value or an average value of the calculated difference values as a determination value of corresponding facility devices. When the determination value calculated by the determination value calculation unit in a facility device included in the three or more facility devices exceeds a preset threshold, the abnormality detection unit is configured to detect the facility device as a facility device in which an abnormality has occurred with respect to the operation status information.

**In** the abnormality detection method for a facility device according to an embodiment of the present invention, operation status information related to the predetermined item is acquired for each predetermined time from each of three or more facility devices that are predetermined to be configured with the same specification, and to have a similar operating environment. **In** the abnormality detection method for a facility device, a feature value of the operation status information related to the predetermined item is calculated, based on the acquired information, for each facility device included in the three or more facility devices, the difference values between the feature value of any one the three or more facility devices and each of the other of the three or more facility devices, a median value or an average value of the calculated difference values as determination values of corresponding facility devices. In the abnormality detection method for a facility device, when a determination value calculated for one facility device included in the three or more facility devices exceeds a preset threshold value, the facility device is detected as a facility device in which an abnormality has occurred with respect to the operation status information.

### BRIEF DESCRIPTION OF THE DRAWINGS

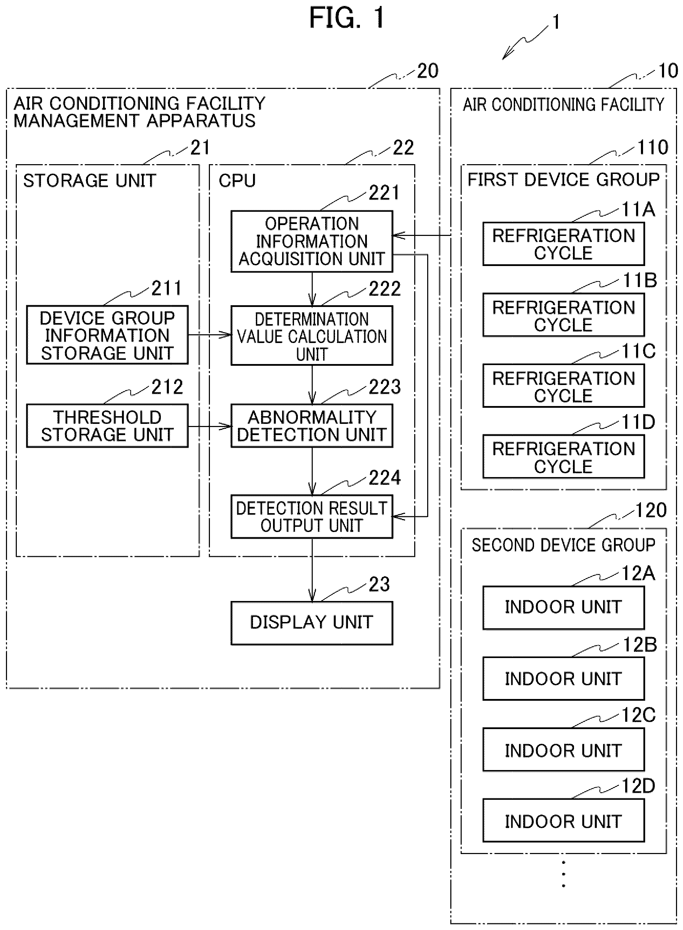

[FIG. 1] FIG. 1 is an overall view illustrating an air conditioning system using an air conditioning facility management apparatus according to an embodiment.

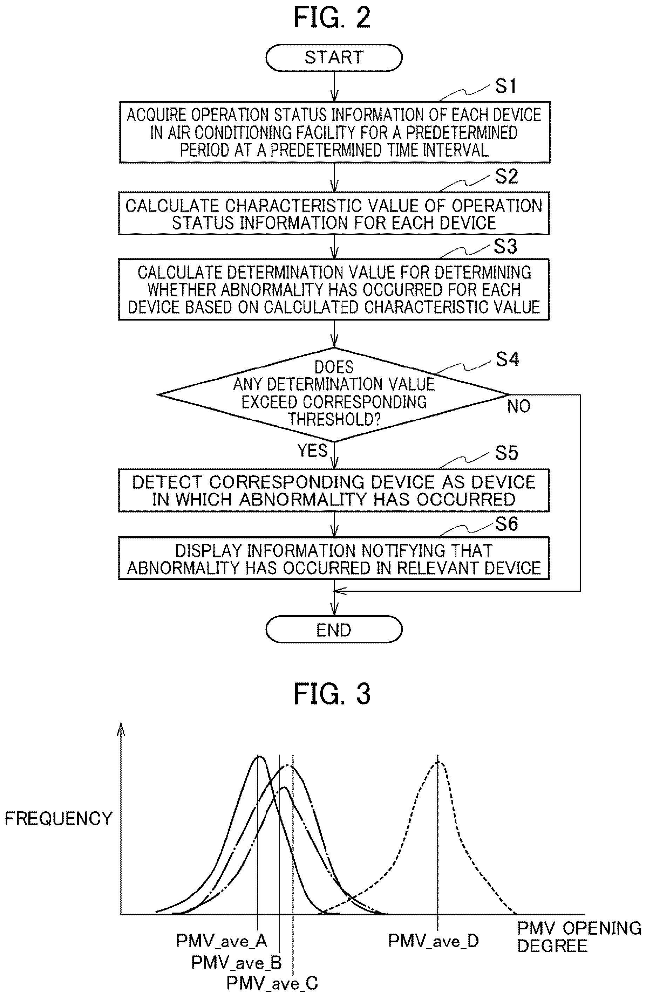

[FIG. 2] FIG. 2 is a flowchart illustrating an operation of the air conditioning facility management apparatus according to an embodiment.
[FIG. 3] FIG. 3 is a distribution chart of occurrence frequency generated for each refrigeration cycle, and for each PMV opening degree, based on PMV opening degree data for a plurality of refrigeration cycles to be managed acquired by the air conditioning facility management apparatus according to an embodiment.

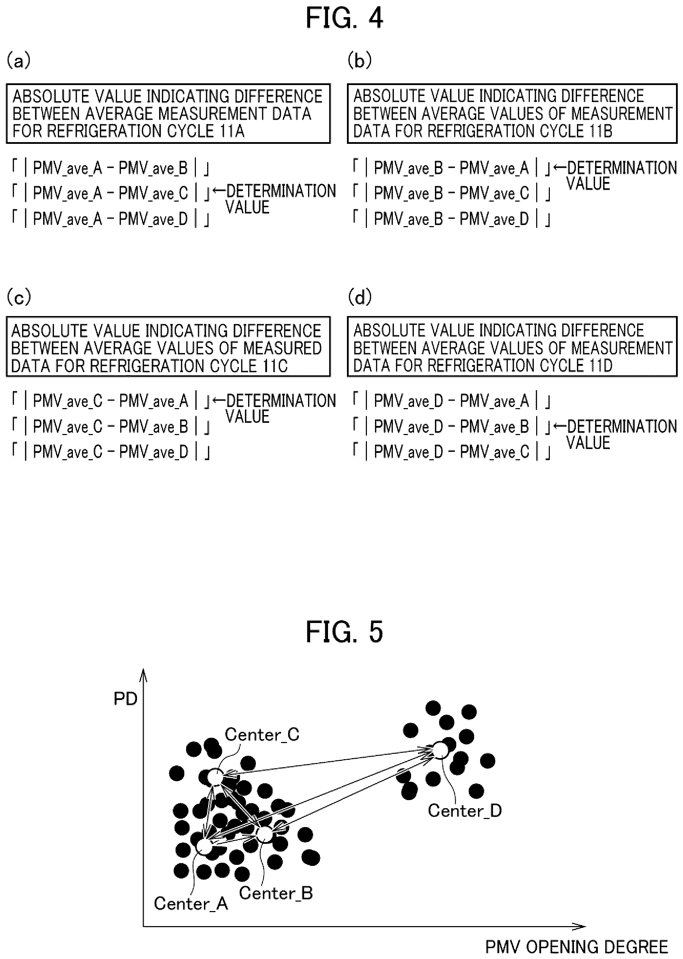

[FIG. 4] FIGS. 4(a) to 4(d) are explanatory diagrams that illustrate absolute values indicating the difference between average values of measurement data for each refrigeration cycle to be managed, and for each of the other refrigeration cycles calculated by the air conditioning facility management apparatus according to an embodiment, and a determination value calculated from the absolute values.
[FIG. 5] FIG. 5 is a scatter plot based on the operation status information for two items acquired by the air conditioning facility management apparatus according to an embodiment, in which corresponding positions are plotted for each refrigeration cycle and for each acquisition timing of the operation status information for the two items on a two-dimensional plane.

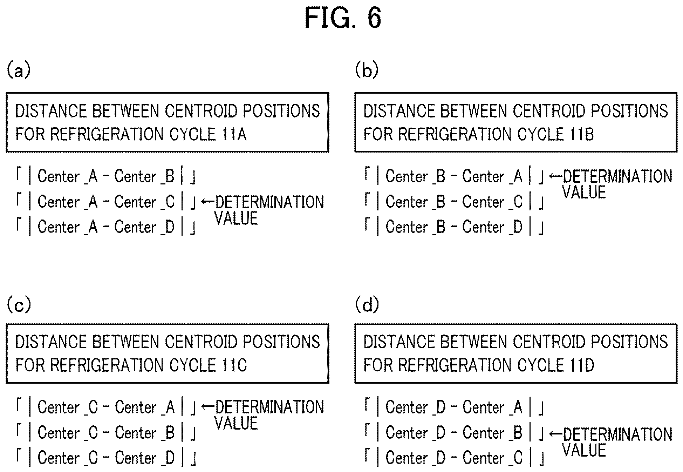

[FIG. 6] FIGS. 6(a) to 6(d) are explanatory diagrams that illustrate the distance between the centroid positions of measurement data for each refrigeration cycle to be managed, and the centroid positions of measurement data for each of other refrigeration cycles calculated by the air conditioning facility management apparatus according to an embodiment, and a determination value calculated using the distance.

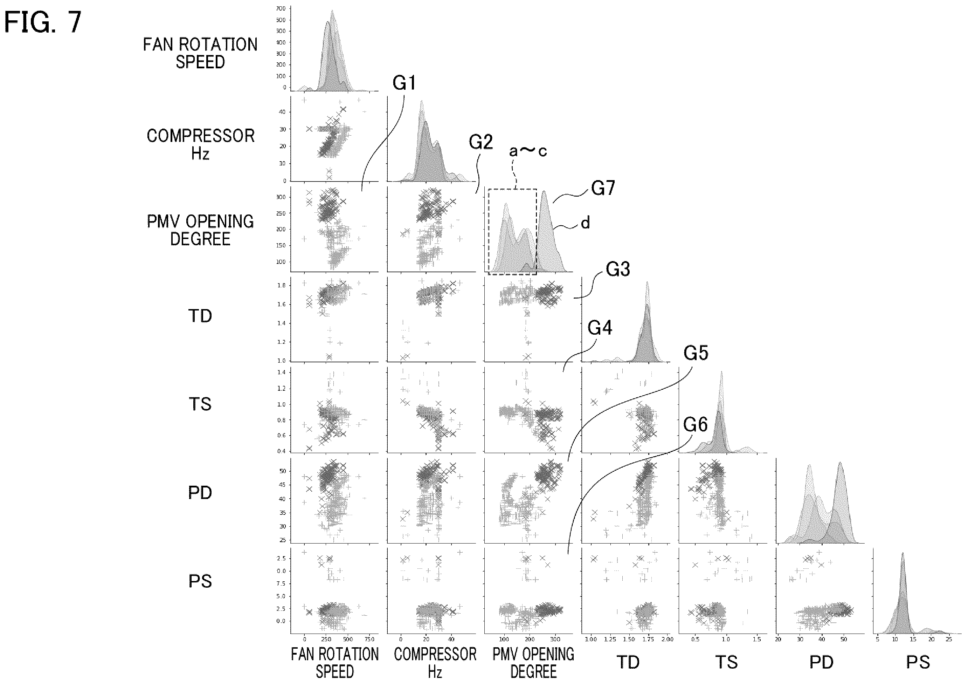

[FIG. 7] FIG. 7 is a screen configuration diagram illustrating a distribution chart generated based on the operation status information for each of a plurality of items acquired from the air conditioning facility to be managed by the air conditioning facility management apparatus according to an embodiment, and a plurality of scatter plots generated for each of the two items of operation status information in different combinations arranged on one screen.

### DETAILED DESCRIPTION

An air conditioning facility management apparatus according to an embodiment that manages a plurality of air conditioners as a plurality of facility devices installed in a building will be described below.

### (Configuration of Air Conditioning System Using Air Conditioning Facility Management Apparatus According to First Embodiment)

A configuration of an air conditioning system using an air conditioning facility management apparatus according to a first embodiment will be described with reference to FIG. 1. An air conditioning system 1A includes an air conditioning facility 10 and an air conditioning facility management apparatus 20 that manages the air conditioning facility 10.

The air conditioning facility 10 includes a plurality of devices installed in a building. These devices are preliminarily classified into at least one device group. The at least one facility device group may be classified into a plurality of device groups (such as a first device group and second device group). When classified into a plurality of device groups, the device groups are classified so that the devices are configured with the same specifications and with similar operating environments based on the installation location, the influence of disturbance due to degradation over time, or the like (the characteristic values of the operating environment information have a correlation). Three or more facility devices belong to each device group. The devices configured with the same specifications that can be classified into the same device group are, for example, heat sources, outdoor units, or indoor units.

A method of grouping a plurality of devices in the air conditioning facility 10 in the embodiment will be described. Specifically, (1) a method of grouping heat sources, (2) a method of grouping air conditioners (outdoor units and indoor units) in an air conditioning system in a multi-type building configuration, and (3) a method of grouping air conditioners (outdoor units and indoor units) in an air conditioning system in a single-type configuration will be described.

### (1) Method of Grouping Heat Sources

Heat sources in an air conditioning system are grouped as follows, for example.
(1-1) Multiple module chillers configured in one unit so as to operate the same water system while distributing the load constitute one device group.
(1-2) Multiple refrigeration cycles installed in module chillers configured in one unit so as to operate the same water system while distributing the load constitute one device group.

### (2) Method of Grouping Air Conditioners (Outdoor Units and Indoor Units) in Air Conditioning System in Multi-type Building Configuration

**In** the case of an air conditioning system in multi-type building configuration including a configuration in which a plurality of indoor units are connected to one outdoor unit by communication lines and piping, the air conditioners in this air conditioning system are grouped as follows, for example.
(2-1) Multiple outdoor units connected to each other constitute one device group.
(2-2) Multiple indoor units that are installed in the same room in a building, connected to the same outdoor unit, and belong to the same refrigerant system constitute one device group.
(2-3) Multiple outdoor units that are connected to the indoor unit installed in the same room in a building constitute one device group.
(2-4) Multiple indoor units that are installed in the same room in a building constitute one device group, regardless of whether or not the connected outdoor unit is the same.

### (3) Method of Grouping Air Conditioners (Outdoor Units and Indoor Units) in a Single-Type Air Conditioning System

In the case of a single-type air conditioning system in which one indoor unit is connected to one outdoor unit by communication lines and piping, the air conditioners in this air conditioning system are grouped as follows, for example.
(3-1) Multiple outdoor units that are installed in the same room in a building constitute one device group.
(3-2) Multiple indoor units installed in the same room in a building constitute one device group.

The air conditioning facility 10 illustrated in FIG. 1 has a plurality of device groups including a first device group 110 to which refrigeration cycles classified according to the method (1-2) belong, and a second device group 120 to which the indoor units classified according to the method (2-2) belong. Refrigeration cycles 11A, 11B, 11C, and 11D, which are mounted on module chillers configured as one unit, belong to a first device group 110. Indoor units 12A, 12B, 12C, and 12D installed in the same room in a building belong to a second device group 120.

The air conditioning facility management apparatus 20 includes, for example, a controller or a cloud server for monitoring and controlling the air conditioning facility 10, including a storage unit 21 and a processor (Central Processing Unit: CPU) 22. The storage unit 21 includes a device group information storage unit 211 and a threshold value storage unit 212. The device group information storage unit 211 is configured to store grouping information of the devices in the air conditioning facility 10 classified as described above.

The threshold storage unit 212 is configured to store thresholds for each item of the operation status information described below, and for each combination of items of the operation status information, which are preset to detect the device in which an abnormality has occurred as described below.

The processor (CPU) 22 can process data or the like in an operation information acquisition unit 221, a determination value calculation unit 222, an abnormality detection unit 223, and a detection result output unit 224.

The operation information acquisition unit 221 is configured to acquire operation status information related to a predetermined item from each device in the air conditioning facility 10 for each predetermined time.

The determination value calculation unit 222 is configured to calculate a feature value of operation status information related to a predetermined item for each device based on the information acquired by the operation information acquisition unit 221. The determination value calculation unit 222 is configured to calculate an absolute value indicating the difference between the feature value of one device and each of the other devices, and calculate a median value of the calculated values as a determination value of the corresponding device. The feature value of operation status information for each device calculated by the determination value calculation unit 222 is, for example, an average value or a median value of operation status information related to a predetermined item for each predetermined time.

When the determination value calculated by the determination value calculation unit 222 of the facility device exceeds a threshold value of a corresponding item stored in the threshold storage unit 212, the abnormality detection unit 223 is configured to detect the facility device as a device in which an abnormality has occurred. The detection result output unit 224 is configured to display the detection result obtained by the abnormality detection unit 223 on a display unit 23.

The display unit 23 is made up of, for example, a liquid crystal display, and displays display information based on an instruction from the detection result output unit 224.

### (Operation of Air Conditioning System Using Air Conditioning Facility Management Device according to First Embodiment)

Next, an operation example of the air conditioning system 1A according to the embodiment will be described. FIG. 2 is a flowchart illustrating the processing performed by the air conditioning facility management apparatus 20 when the air conditioning system 1A operates.

First, the operation information acquisition unit 221 of the air conditioning facility management apparatus 20 acquires the operation status information of the refrigeration cycles 11A to 11D, in the first device group 110 of the air conditioning facility 10, at predetermined time intervals for a predetermined period (S1). The predetermined time interval for acquiring the operation status information of the refrigeration cycles 11A to 11D is, for example, a one minute interval. The predetermined period for acquiring the operation status information of the devices in the air conditioning facility 10 is set by the operation information acquisition unit 221 at a period in which all the devices in the air conditioning facility 10 are expected to operate for a certain period of time. The predetermined period for acquiring the operation status information of the devices in the air conditioning facility 10 by the operation information acquisition unit 221 is, for example, about one month to several months.

The predetermined items acquired as the operation status information of each refrigeration cycle may be, for example, fan rotation speed, compressor frequency, solenoid valve (PMV) opening, discharge temperature (TD) which is a refrigerant temperature at an outlet side of a compressor, intake temperature (TS) which is a refrigerant temperature at an inlet side of a compressor, discharge pressure (PD) which is a refrigerant pressure at the outlet side of the compressor, suction pressure (PS) which is a refrigerant pressure at the inlet side of the compressor, or the like.

Next, the determination value calculation unit 222 calculates a characteristic value of the operation status information for each refrigeration cycle based on the information acquired by the operation information acquisition unit 221 (S2). Then, based on a calculated characteristic value, the determination value calculation unit 222 calculates a determination value for determining whether an abnormality has occurred for each refrigeration cycle (S3).

Next, the abnormality detection unit 223 determines whether or not there is a determination value exceeding a corresponding threshold stored in the threshold storage unit 212 among the determination values calculated by the determination value calculation unit 222 (S4). When the abnormality detection unit 223 determines that there is a determination value exceeding a corresponding threshold stored in the threshold storage unit 212 ("YES" in S4), it detects the refrigeration cycle corresponding to the determination value as a refrigeration cycle in which an abnormality has occurred (S5). When the detection result output unit 224 detects the refrigeration cycle in which the abnormality has occurred, it causes the display unit 23 to display information notifying that the abnormality has occurred in a corresponding refrigeration cycle (S6). In step S4, if the abnormality detection unit 223 determines that there is no determination value exceeding the threshold stored in the threshold storage unit 212 among the calculated determination values ("NO" in S4), the processing ends.

Hereinafter, a first abnormality determination processing example will be described, in which the air conditioning facility management apparatus 20 executes processing in steps S2 to S6 based on one item of operation status information acquired by the operation information acquisition unit 221. Further, a second abnormality determination processing example will be described, in which the air conditioning facility management apparatus 20 executes processing in steps S2 to S6 based on two or more items of operation status information acquired by the operation information acquisition unit 221.

### (First Abnormality Determination Processing Example)

In the first abnormality determination processing example, the air conditioning facility management apparatus 20 executes the abnormality determination processing based on the measurement data of the PMV opening, which is one item of the operation status information in the refrigeration cycle of the air conditioning facility 10 acquired by the operation information acquisition unit 221. Hereinafter, this PMV opening measurement data is referred to as "PMV opening data". In this processing example, the determination value calculation unit 222 calculates an average value as a characteristic value of the PMV opening data for each refrigeration cycle (S2).

FIG. 3 is a distribution chart indicating the occurrence frequency for each refrigeration cycle and for each PMV opening generated based on the PMV opening data acquired by the operation information acquisition unit 221. The solid line in FIG. 3 illustrates the occurrence frequency for each PMV opening for the refrigeration cycle 11A. The average value of the PMV opening data for the refrigeration cycle 11 A is the value "PMV_ave_A" within the solid line.

The dash-dotted line in FIG. 3 illustrates the occurrence frequency for each PMV opening for the refrigeration cycle 11B. The average value of the PMV opening data for the refrigeration cycle 11B is the value "PMV_ave_ B" within the dash-dotted line. The dash-double-dotted line in FIG. 3 indicates the occurrence frequency for each PMV opening for the refrigeration cycle 11C. The average value of the PMV opening data of the refrigeration cycle 11C is the value "PMV_ave_C" in the dash-double-dotted line. The dashed line in FIG. 3 indicates the occurrence frequency of each PMV opening for the refrigeration cycle 11D. The average value of the PMV opening data of the refrigeration cycle 11D is the value "PMV_ave_D" in the dashed line.

Next, the determination value calculation unit 222 calculates the absolute value (difference value) of the difference between the average values of the PMV opening data for one refrigeration cycle and each of the other refrigeration cycles, and calculates a median of the difference values calculated for each refrigeration cycle as a determination value for the corresponding refrigeration cycle (S3).

FIG. 4(a) is an explanatory diagram that illustrates an absolute value indicating the difference between the average values of the PMV opening data of the refrigeration cycle 11A and the refrigeration cycles 11B, 11C, and 11D as other refrigeration cycles calculated by the determination value calculation unit 222, and the determination value of the refrigeration cycle 11A calculated from these absolute values.

"|PMV_ave_A - PMV_ave_B|" in FIG. 4(a) is an absolute value indicating the difference between the average value of the PMV opening data of the refrigeration cycle 11A and the average value of the PMV opening data of the refrigeration cycle 11B. "|PMV_ave_A - PMV_ave_C|" is an absolute value indicating the difference between the average value of the PMV opening data of the refrigeration cycle 11A and the average value of the PMV opening data of the refrigeration cycle 11C. "|PMV_ave_A - PMV_ave_D|" is an absolute value indicating the difference between the average value of the PMV opening data of the refrigeration cycle 11A and the average value of the PMV opening data of the refrigeration cycle 11D.

The determination value calculation unit 222 recognizes "|PMV_ave_A - PMV_ave_C|" as the median value among these three absolute values, and calculates this median value as the first determination value of the refrigeration cycle 11A.

Similarly, the determination value calculation unit 222 calculates "|PMV_ave_B - PMV_ave_A|" as the first determination value of the refrigeration cycle 11B, as illustrated in FIG. 4(b); calculates "|PMV_ave_C - PMV_ave_A|" as the first determination value of the refrigeration cycle 11C, as illustrated in FIG. 4(c); and calculates "|PMV_ave_D - PMV_ave_B|" as the first determination value of the refrigeration cycle 11D, as illustrated in FIG. 4(d).

Next, the abnormality detection unit 223 determines whether or not among the first determination values calculated by the determination value calculation unit 222, there is a first determination value exceeding the threshold value related to the PMV opening stored in the threshold storage unit 212 (S4).

If the threshold value related to the PMV opening is less than "|PMV_ave_D - PMV_ave_B|", the abnormality detection unit 223 determines that the determination value of the refrigeration cycle 11D exceeds a corresponding threshold value stored in the threshold storage unit 212 ("YES" in S4). Then, the corresponding refrigeration cycle 11D is detected as a refrigeration cycle in which an abnormality has occurred (S5).

When the abnormality detection unit 223 detects that an abnormality has occurred in the refrigeration cycle 11D, information reporting that an abnormality has occurred in the refrigeration cycle 11D is displayed on the display unit 23 under the control of the detection result output unit 224 (S6).

### (Second Abnormality Determination Processing Example)

In the second abnormality determination processing example, the air conditioning facility management apparatus 20 performs abnormality determination processing based on the PMV opening data, and the measurement data of the pressure (PD) of the refrigerant on the outlet side of the compressor, which are two items of the operation status information of the refrigeration cycle of the air conditioning facility 10 acquired by the operation information acquisition unit 221. Hereinafter, the measurement data of the pressure of the refrigerant on the outlet side of the compressor is referred to as "discharge pressure data".

FIG. 5 is a scatter plot in which positions corresponding to each refrigeration cycle and each acquisition timing of the operation status information of the two items are plotted on a two-dimensional plane having axes corresponding to each of the two items, based on the operation status information of the two items acquired by the operation information acquisition unit 221. The determination value calculation unit 222 calculates the centroid positions of the plurality of plots for each refrigeration cycle in the scatter diagram as feature values for each refrigeration cycle related to the operation status information of the two items.

In FIG. 5, "Center_A" marked with "O" indicates the centroid position of multiple plots for refrigeration cycle 11A; "Center_B" marked with "O" indicates the centroid position of multiple plots for refrigeration cycle 11B; "Center_C" marked with "O" indicates the centroid position of multiple plots for refrigeration cycle 11 C; and "Center_D" marked with "O" indicates the centroid position of multiple plots for refrigeration cycle 11D.

Next, for each refrigeration cycle, the determination value calculation unit 222 calculates the distance between the centroid positions in the two-dimensional space, for example, the Mahalanobis distance, as an absolute value indicating the difference between the centroid positions of the plots of one refrigeration cycle and each of the other refrigeration cycles.

Next, for each refrigeration cycle, the determination value calculation unit 222 calculates the median value of the distance between the centroid positions of the plots of one refrigeration cycle and each of the other refrigeration cycles, as a decision value for the corresponding refrigeration cycle.

FIG. 6(a) is an explanatory diagram that illustrates the distances calculated by the determination value calculation unit 222 between the centroid positions of the plots of the refrigeration cycle 11A and each of the other refrigeration cycles 11B, 11C, and 11D, and the determination values of the refrigeration cycle 11A calculated from these distances.

"|Center_A - Center_B|" in FIG. 6(a) indicates the distance between the centroid position of the plots of the refrigeration cycle 11A and the centroid position of the plots of the refrigeration cycle 11B. "|Center_A - Center_C|" indicates the distance between the centroid position of the plots of the refrigeration cycle 11A and the centroid position of the plots of the refrigeration cycle 11C. "|Center_A - Center_D|" indicates the distance between the centroid position of the plots of the refrigeration cycle 11A and the centroid position of the plots of the refrigeration cycle 11D.

The determination value calculation unit 222 recognizes "|Center_ A - Center_C|" as the median value among these three distances, and calculates this median value as the second determination value of the refrigeration cycle 11A.

Similarly, the determination value calculation unit 222 calculates "|Center_B - Center_A|" as the second determination value of the refrigeration cycle 11B, as illustrated in FIG. 6(b); calculates "|Center_C - Center_A|" as the second determination value of the refrigeration cycle 11C, as illustrated in FIG. 6(c); and calculates "| Center_D - Center_B|" as the second determination value of the refrigeration cycle 11D, as illustrated in FIG. 6(d).

Next, the abnormality detection unit 223 determines whether or not there is a second determination value exceeding the threshold value related to the PMV opening data and the discharge pressure data stored in the threshold storage unit 212 among the second determination values calculated by the determination value calculation unit 222 (S4).

If the threshold value related to the PMV opening data and the discharge pressure data is less than "|Center_D - Center_B|", the abnormality detection unit 223 determines that the determination value of the refrigeration cycle 11D exceeds the corresponding threshold value stored in the threshold storage unit 212 ("YES" in S4). Then, the corresponding refrigeration cycle 11D is detected as the refrigeration cycle in which an abnormality has occurred (S5).

When the abnormality detection unit 223 detects that an abnormality has occurred in the refrigeration cycle 11D, information reporting that an abnormality has occurred in the refrigeration cycle 11D is displayed on the display unit 23 under the control of the detection result output unit 224 (S6).

Based on the operation status information acquired by the operation information acquisition unit 221, the detection result output unit 224 may generate, for each item of a plurality of items (in this case, PMV opening data and discharge pressure data), a distribution chart illustrating the occurrence frequency of measurement data (operation status information) for each refrigeration cycle and each operation status, and a scatter diagram illustrating plots corresponding to the operation status information for each refrigeration cycle in a multidimensional space having axes corresponding to each of the plurality of items in different combinations, which are arranged on one screen and displayed on the display unit 23.

FIG. 7 illustrates a screen configuration diagram in which a plurality of distribution charts generated for each of a plurality of items based on the operation status information, and a plurality of scatter diagrams generated for each of two items of operation status information in a plurality of different combinations, are arranged on one screen. The distribution charts and the scatter diagrams are obtained when a refrigerant leakage occurs in one of the refrigeration cycles of the air conditioning facility 10.

FIG. 7 illustrates scatter plots generated based on the operation status information for corresponding two items at the positions where different items in the horizontal direction and vertical direction cross each other, with respect to items, specifically, fan rotation speed, compressor frequency (compressor Hz), PMV opening degree, discharge temperature (TD) which is the refrigerant temperature at the outlet side of the compressor, suction temperature (TS) which is the refrigerant temperature at the inlet side of the compressor, discharge pressure (PD) which is the refrigerant pressure at the outlet side of the compressor, and suction pressure (PS) which is the refrigerant pressure at the inlet side of the compressor.

In the scatter plots of FIG. 7, a plot marked by a dark x-mark is a plot for each acquisition timing of the corresponding operation status information for the refrigeration cycle in which the refrigerant leakage has occurred. The light-colored plots indicated by +, |, and - marks are plots for each acquisition timing of the corresponding operating status information for a refrigeration cycle that is operating normally.

In a refrigeration cycle in which a refrigerant leak has occurred, the PMV opening is larger than in the normal case. As a result, in the scatter diagram related to the PMV opening, the dark x-mark plot point cloud for one refrigeration cycle in which a refrigerant leak has occurred deviates significantly in the direction of the axis indicating the PMV opening from the light-colored plot point cloud for three refrigeration cycles that are operating normally. Scatter plots related to the PMV opening illustrated in FIG. 7 are specifically a scatter plot G1 generated based on the PMV opening and the fan rotation speed, a scatter plot G2 generated based on the PMV opening and the compressor Hz, a scatter plot G3 generated based on the discharge temperature (TD) and the PMV opening, a scatter plot G4 generated based on the suction temperature (TS) and the PMV opening, a scatter plot G5 generated based on the discharge pressure (PD) and the PMV opening, and a scatter plot G6 generated based on the suction pressure (PS) and the PMV opening.

FIG. 7 illustrates distribution charts indicating a occurrence frequency for each refrigeration cycle, and for each corresponding operation status information, generated based on the operation status information of one corresponding item at the position where the same items in the horizontal direction and the vertical direction cross each other, as described in the first abnormality determination processing example above.

Among these distribution charts, in the distribution chart G7 generated based on the PMV opening, the distribution chart d for one refrigeration cycle in which a refrigerant leak has occurred deviates significantly from the distribution charts a to c for three refrigeration cycles that are operating normally.

Thus, a manager who visually sees the screen can recognize that an abnormality has occurred for the PMV opening in the refrigeration cycle corresponding to the x mark plot and corresponding to the distribution chart d.

According to the first embodiment described above, the air conditioning facility management apparatus 20 can detect an abnormal air conditioner in a plurality of air conditioners configured with the same specifications by simple numerical calculation without using complicated calculation, such as a mathematical model based on machine learning. **In** this case, by comparing a plurality of air conditioners installed in the same environment, an abnormality can be detected without being affected by the operating environment. **In** addition, by comparing a plurality of air conditioners installed in the same period, an abnormality can be detected without being affected by degradation over time.

**In** the embodiment described above, control may be changed stepwise according to phenomena that change with the passage of time. For example, when there are tendencies such as a PMV primary side fluid density decrease, an opening degree increase due to the PMV opening control, and a discharge temperature increase after reaching the PMV upper opening degree, a warning of the initial state of refrigerant leakage may be output as the primary determination of refrigerant leakage due to the PMV opening degree. Furthermore, when changes in the PMV opening degree and the discharge temperature are detected in the same air conditioner thereafter, it may be determined that the refrigerant leakage has progressed to an end stage of refrigerant leakage, and a warning different from the warning given for the initial state of refrigerant leakage may be output.

"Second Abnormality Determination Processing Example" of the embodiment above describes a case where the determination value calculation unit 222 calculates the median value of the distance between the centroid positions of the plots of one refrigeration cycle and each of the other refrigeration cycles as a determination value for each corresponding refrigeration cycle. However, the average value of the distance between the centroid positions may be calculated as the determination value for each corresponding refrigeration cycle.

"Second Abnormality Determination Processing Example" of the embodiment above describes a case where the air conditioning facility management apparatus 20 performs abnormality determination processing based on the operation status information of two items in the refrigeration cycle of the air conditioning facility 10. However, without limitation to this case, the abnormality determination processing may be performed based on the operation status information of three or more items.

**In** this case, the determination value calculation unit 222 calculates the centroid position of the plurality of plots for each refrigeration cycle corresponding to the measurement data as the characteristic values for each refrigeration cycle related to the measurement data of the plurality of items based on the operation status information of a plurality of corresponding items. Thereafter, similar to the second abnormality determination processing example described above, the determination value calculation unit 222 calculates the determination value for each refrigeration cycle, and detects the refrigeration cycle in which an abnormality has occurred based on the determination value.

When the abnormality detection unit 223 detects a facility device in which the abnormality has occurred based on any of the determination values, the item of the operation status information in which the abnormality has occurred can be specified, based on the direction of deviation of the centroid position of the refrigeration cycle, in which the abnormality has occurred, from the centroid position of the plurality of refrigeration cycles operating normally in a multidimensional space.

**In** the embodiment described above, refrigerant leakage determination using the PMV opening is mainly described, but various other abnormalities may be detected. For example, in the case of clogging of the fins of the air-heating system, an abnormality may be determined by a combination of outliers of different data, such as an increase in fan rotation speed, and an increase in the condensation temperature and evaporation temperature.

**In** the embodiment described above, the threshold values need to be set to appropriate values for each item of operation status information stored in the threshold storage unit 212 of the air conditioning facility management apparatus 20, and for each combination of a plurality of items of operation status information, in order to determine the degree of deviation of the characteristic value (average value or centroid position in a multidimensional space) for the operation status information from the threshold values for detecting the device as a device in which an abnormality has occurred.

Even among devices installed in a similar environment and operated under similar conditions, the tendency of measurement data may differ somewhat due to individual differences of each device, and it is not desirable that the air conditioning facility management apparatus 20 determine that such a difference in tendency is an abnormality.

Therefore, when information such as measurement error peculiar to an individual device is known, it is desirable to set the threshold value in consideration of the information. For example, when it is known in advance that the measurement error of a specific temperature sensor is ±0.5°C, the threshold value of measurement data related to the temperature sensor is set at a value larger than 0.5°C. When it is known in advance that the PMV opening of a predetermined refrigeration cycle varies by ±10% due to manufacturing error, the threshold value of measurement data related to the PMV opening of the refrigeration cycle is set at a value larger than +10% of the maximum opening.

However, it is desirable to set each threshold in consideration of the influence of each factor, since there may be errors that occur in combination among multiple measurement items, such as when the measurement error of the temperature sensor affects the PMV opening.

Further, when the measurement error information specific to the device is unknown, or when it is difficult to consider errors that occur in combination among multiple measurement items, it is desirable to set the threshold based on a value that can be quantitatively managed, such as a 95% confidence interval or a 95% confidence ellipse in the measurement data, and adjust the threshold based on the occurrence of false detection after operation, as appropriate.

Moreover, in the embodiment described above, even if a plurality of predetermined devices are assumed to be configured with the same specifications and have similar operating environments, and are classified into the same group, there may be cases in which the devices are determined to be abnormal despite operating normally.

For example, even in the same room, an indoor unit installed in the perimeter zone at a window may have a higher thermal load than other indoor units, and may have a temperature setting that is extremely high or low. **In** such a case, there is a possibility that the tendency of measurement data differs among the indoor units installed in the same room and classified into the same group, and the indoor unit installed in the perimeter zone may be determined to be abnormal.

**In** such a case, if an abnormality is detected in a device in spite of normal operation, it is necessary to remove the corresponding device from the group and reset.

**In** the embodiment above, a case where facility devices are air conditioners is described, but without limitation thereto, other facility devices for industrial use can also be used.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

The entire contents of Japanese Patent Application No. 2022-181947 (filing date: November 14, 2022) are incorporated herein by reference.

## Claims

1. A facility device management apparatus, comprising:
an operation information acquisition unit configured to acquire operation status information related to a predetermined item for each predetermined time from each of three or more facility devices that are predetermined to be configured with the same specification and to have a similar operating environment;
a determination value calculation unit configured to: calculate a feature value of the operation status information related to the predetermined item for each predetermined time, based on the information acquired in the operation information acquisition unit, for each facility device included in the three or more facility devices; calculate a difference value between the feature values of any one of the three or more facility devices and each of the other of the three or more facility devices; and calculate a median value or an average value of calculated difference values as determination values of relevant facility devices; and
an abnormality detection unit configured to detect, when a determination value calculated by the determination value calculation unit for one facility device included in the three or more facility devices exceeds a preset threshold value, that the one facility device is detected as a facility device in which an abnormality has occurred with respect to the operation status information.

2. The facility device management apparatus according to claim 1, wherein the determination value calculation unit is configured to calculate an average value or a median value of the operation status information related to the predetermined item for each predetermined time as the feature value, and calculate the determination value based on the feature value.

3. The facility device management apparatus according to claim 1, wherein
the operation information acquisition unit is configured to acquire the operation status information related to a plurality of items included in the predetermined items for each predetermined time from each of the three or more facility devices, and
the determination value calculation unit is configured to: calculate, based on information acquired by the operation information acquisition unit, a centroid position of plots corresponding to the operation status information for each facility device included in the three or more facility devices in a multidimensional space having axes corresponding to each of the plurality of items as the feature value of each of the facility devices with respect to the plurality of items; and calculate, based on the feature value, a determination value for each of the facility devices with respect to the plurality of items.

4. The facility device management apparatus according to claim 3, further comprising a detection result output unit configured to generate and display, based on the operation status information acquired by the operation information acquisition unit, a distribution chart indicating an occurrence frequency of the operation status information for each of the facility devices included in the three or more facility devices and for each operation status, and a scatter plot indicating plots corresponding to the operation status information for each of the facility devices in different combinations in a multidimensional space having axes corresponding to each of the items of the plurality of items.

5. The facility device management apparatus according to claim 1, wherein
the three or more facility devices are devices installed in an air conditioning facility, and
the operation status information includes at least one of: fan rotation speed of a refrigeration cycle in the air conditioning facility, compressor frequency, a solenoid valve opening, a discharge temperature which is a refrigerant temperature at an outlet side of a compressor, a suction temperature which is a refrigerant temperature at an inlet side of a compressor, a discharge pressure which is a refrigerant pressure at an outlet side of a compressor, or a suction pressure which is a refrigerant pressure at an inlet side of a compressor.

6. An abnormality detection method for a facility device, comprising:
acquiring operation status information related to a predetermined item for each predetermined time from each of three or more facility devices that are predetermined to be configured with the same specification and to have a similar operating environment;
calculating a feature value of the operation status information related to the predetermined item for each predetermined time, based on the acquired information, for each facility device included in the three or more facility devices, calculating a difference value between the feature values of any one of the three or more facility devices and each of the other of the three or more facility devices; and calculating a median value or an average value of the calculated difference values as determination values of relevant facility devices; and
detecting, when a determination value calculated for one facility device included in the three or more facility devices exceeds a preset threshold value, that the one facility device as a facility device in which an abnormality has occurred with respect to the operation status information.
